# EUROPÄISCHE PATENTSCHRIFT

(11) **EP 4 684 503 B1**
(45) Veröffentlichungstag und Bekanntmachung des Hinweises auf die Patenterteilung: **14.10.2026**
(21) Anmeldenummer: 24721876.1
(22) Anmeldetag: 12.04.2024
(51) Int. Cl.: H04L 9/32, H04L 9/00

(54) **ATTRIBUTZERTIFIKAT AUFWEISEND EINE KRYPTOGRAPHISCHE ZUSATZINFORMATION ZU EINEM DIGITALEN ZERTIFIKAT**
ATTRIBUTE CERTIFICATE COMPRISING CRYPTOGRAPHIC ADDITIONAL INFORMATION RELATING TO A DIGITAL CERTIFICATE
CERTIFICAT D'ATTRIBUT COMPRENANT UNE INFORMATION SUPPLÉMENTAIRE CRYPTOGRAPHIQUE VERS UN CERTIFICAT NUMÉRIQUE

(30) Priorität: 05.05.2023 EP 23171824
(43) Veröffentlichungstag der Anmeldung: 28.01.2026
(73) Patentinhaber: Siemens Aktiengesellschaft, 80333 München (DE)
(72) Erfinder: FALK, Rainer, 81739 München (DE); FRIES, Steffen, 81739 München (DE)
(74) Vertreter: Siemens Patent Attorneys
(86) Internationale Anmeldenummer: PCT/EP2024/059982
(87) Internationale Veröffentlichungsnummer: WO 2024/231024

(56) Entgegenhaltungen:
- US-B1- 10 277 400
- US-B2- 7 356 690
- FARRELL TRINITY COLLEGE DUBLIN R HOUSLEY VIGIL SECURITY S TURNER IECA S: "An Internet Attribute Certificate Profile for Authorization; rfc5755.txt", AN INTERNET ATTRIBUTE CERTIFICATE PROFILE FOR AUTHORIZATION; RFC5755.TXT, INTERNET ENGINEERING TASK FORCE, IETF; STANDARD, INTERNET SOCIETY (ISOC) 4, RUE DES FALAISES CH- 1205 GENEVA, SWITZERLAND, 25 January 2010 (2010-01-25), pages 1 - 50, XP015068164

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Verfahren zum Bereitstellen mindestens einer kryptographischen Zusatzinformation zu einem digitalen Zertifikat. Die Erfindung betrifft außerdem ein zugehöriges Computerprogrammprodukt und ein computerlesbares Medium.

### Beschreibung des Stands der Technik

Ein digitales Zertifikat, z.B. nach X.509, bestätigt, welchem Nutzer (Identität) ein bestimmter öffentlicher kryptographischer Schlüssel zugeordnet ist. Der Nutzer kann dadurch seine Identität nachweisen, wenn er sich mit seinem privaten und dem zugehörigen öffentlichen Schlüssel authentisiert. Digitale Zertifikate werden auch als Public-Key-Zertifikate bezeichnet.

Mit der Einführung neuer kryptographischer Algorithmen, insbesondere der Einführung von Post-Quantum-sicheren kryptographischen Algorithmen, besteht der Bedarf, dass ein Nutzer über mehrere Schlüsselpaare bestehend jeweils aus einem privatem und einem öffentlichen Schlüssel verfügt.

Diese Schlüsselpaare für unterschiedliche kryptographische Algorithmen können in hybriden kryptographischen Authentisierungsprotokollen verwendet werden, oder es kann eine mehrfache Authentisierung unter Nutzung der Schüssel unterschiedlicher kryptographischer Algorithmen erfolgen, oder es kann einer der vorhandenen Schlüssel bzw. der unterstützten kryptographischen Algorithmen oder eine Teilmenge der vorhandenen Schlüssel bzw. der unterstützten kryptographischen Algorithmen ausgewählt werden.

Speziell aus ITU-T X.509:2019 ist bekannt, dass ein digitales Zertifikat mehrere öffentliche Schlüssel und/oder auch mehrere Signaturen, die mit unterschiedlichen Algorithmen gebildet wurden, enthalten kann. Diese Zertifikate werden auch als hybride Zertifikate (engl. "hybrid certificates") oder als zusammengesetzte Zertifikate (engl. "composite certificates") oder als hybride zusammengesetzte Zertifikate (engl. "hybrid composite certificates") bezeichnet. Dazu definiert der Standard eine Erweiterung, in der diese kryptographische Zweitinformation, auch als kryptographische Zusatzinformation bezeichenbar (alternativer öffentlicher Schlüssel und/oder alternative Signaturen) enthalten sind.

Von aktuellen Standardisierungsarbeiten (z.B. bei IETF LAMPS) und aus Patentschriften (speziell ISARA US9660978 und US10425401) ist bekannt, dass ein digitales Zertifikat mehrere öffentliche Schlüssel eines Nutzers bestätigen kann, und dass ein digitales Zertifikat durch mehrere digitale Signaturen der ausstellenden Zertifikatsstelle geschützt sein kann. Der zweite öffentliche Schlüssel beziehungsweise die zweite digitale Signatur wird dabei in einem Erweiterungsfeld des Zertifikats codiert. Diese kryptographische Zweitinformation, d.h. der zweite öffentlicher Schlüssel des Nutzers und/oder die zweite digitale Signatur des Zertifikats, ist damit aber im digitalen Zertifikat selbst enthalten. Der von US9660978 und US10425401 bekannte Ansatz, die für eine Post-Quantum-Crypto benötigten Zusatzinformationen zu einem zweiten öffentlichen Schlüssel des Nutzers oder eine zweite digitale Signatur des Zertifikats in einem Erweiterungsfeld (Certificate Extension) zu codieren, hat den Nachteil, dass diese Information das digitale Zertifikat vergrößert. Dieses vergrößerte Zertifikat wird dann auch an Kommunikationspartner übertragen, die diese Zusatzinformation gar nicht benötigen oder auswerten können. Außerdem ist die Validierung der digitalen Zertifikate komplex und damit zusätzlich fehleranfällig, falls sie auf dem Zielgerät durchgeführt werden kann. Außerdem skaliert dieser Ansatz schlecht, wenn ein Nutzer über mehr als zwei öffentliche Schlüssel verfügt oder wenn mehr als zwei digitale Signaturen des Zertifikats verwendet werden.

Die Patentschrift US 7 356 690 zeigt eine Methode und ein System zur Verwaltung von Attributzertifikaten. Eine Erweiterung innerhalb eines Attributzertifikats, der sogenannte verteilte Vertrauenspfad-Locator, ermöglicht es, ein Attributzertifikat physisch von seinen zugehörigen öffentlichen Schlüsselzertifikaten zu trennen, während die logische Zuordnung zu diesen erhalten bleibt.

Zusätzlich zu digitalen Zertifikaten sind allgemein Attributzertifikate bekannt. Attributzertifikate bestätigen eine Ergänzungsinformation/Zusatzinformation (ein Attribut) zu einem Nutzer (auch als "Subject" bezeichnet) beziehungsweise zu seinem digitalen Zertifikat oder einem Gerät eines Nutzers. Attributzertifikate werden aktuell in Praxis kaum verwendet. Da ein reguläres digitales Zertifikat häufig einen relativ langen Gültigkeitszeitraum hat (z.B. ein oder zwei Jahre), können über ein kürzer gültiges Attributzertifikat unterschiedliche Zusatzinformation geschützt bereitgestellt werden. Attributzertifikate werden teilweise auch als "Authorization Certificate" bezeichnet. Ein Attributzertifikat enthält im Gegensatz zu einem regulären digitalen Zertifikat keinen öffentlichen Schlüssel. Stattdessen enthält es einen Holder-Eintrag, der auf das zugeordnete digitale Zertifikat verweist. Dabei sind drei Varianten spezifiziert, baseCertificateID, entityName und objectDigestInfo (d.h. über die Seriennummer und Herausgebername des Zertifikats, über den Nutzernamen, oder über einen Hash-Wert). Es ist somit bekannt, dass ein Attributzertifikat, das keinen öffentlichen Schlüssel bestätigt, auf ein digitales Zertifikat verweist, das einen öffentlichen Schlüssel bestätigt.

Die Aufgabe der Erfindung besteht darin, eine Lösung für eine verbesserte Verwendbarkeit von einem digitalen Zertifikat, welches mehrere öffentliche Schlüssel eines Nutzers bestätigt und/oder welches durch mehrere digitale Signaturen der ausstellenden Zertifikatsstelle geschützt ist, anzugeben.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Bereitstellen mindestens einer kryptographischen Zusatzinformation zu einem digitalen Zertifikat,
wobei die mindestens eine kryptographische Zusatzinformation als mindestens eine Post-Quantum kryptographische Zusatzinformation ausgebildet ist,
wobei das digitale Zertifikat:
   ∘ einen ersten öffentlichen Schlüssel eines Nutzers für einen ersten kryptographischen Algorithmus aufweist, und/oder
   ∘ mit einer ersten digitalen Signatur eines Herausgebers des digitalen Zertifikats gemäß eines ersten kryptographischen Signaturverfahrens geschützt ist,
wobei die mindestens eine kryptographische Zusatzinformation:
   ∘ jeweils einen zweiten öffentlichen Schlüssel eines Nutzers für jeweils einen zweiten kryptographischen Algorithmus bestätigt, und/oder
jeweils mit einer zweiten digitalen Signatur des Herausgebers des digitalen Zertifikats jeweils gemäß eines zweiten kryptographischen Signaturverfahrens das digitale Zertifikat schützt, das Verfahren, aufweisend die Schritte:
   - ein Abrufen der mindestens einen kryptographischen Zusatzinformation,
      wobei die mindestens eine Zusatzinformation jeweils von (im Sinne von "aus") mindestens einem Attributzertifikat, welches dem digitalen Zertifikat zugeordneten ist, abgerufen wird,
   - das Bereitstellen der mindestens einen kryptographischen Zusatzinformation,
   - ein Abrufen mindestens einer weiteren kryptographischen Zusatzinformation,
      wobei die mindestens eine weitere kryptographische Zusatzinformation als mindestens eine weitere Post-Quantum kryptographische Zusatzinformation ausgebildet ist,
      wobei die mindestens eine weitere Zusatzinformation jeweils aus mindestens einem weiteren Attributzertifikat, welches dem digitalen Zertifikat zugeordneten ist, abgerufen wird,
   - das Bereitstellen der mindestens einen weiteren kryptographischen Zusatzinformation,
wobei die mindestens eine weitere kryptographische Zusatzinformation:
   ∘ jeweils einen dritten öffentlichen Schlüssel eines Nutzers für jeweils einen dritten kryptographischen Algorithmus bestätigt, und/oder
   ∘ jeweils mit einer dritten digitalen Signatur des Herausgebers des digitalen Zertifikats jeweils gemäß eines dritten kryptographischen Signaturverfahrens das digitale Zertifikat schützt.

Die mindestens eine kryptographische Zusatzinformation ist auch als mindestens eine kryptographische Zweitinformation, insbesondere mindestens eine Post-Quantum kryptographische Zusatzinformation und/oder mindestens eine Post-Quantum kryptographische Zweitinformation bezeichenbar.

Dass die mindestens eine kryptographische Zusatzinformation insbesondere jeweils mit der zweiten digitalen Signatur des Herausgebers des digitalen Zertifikats jeweils gemäß eines zweiten kryptographischen Signaturverfahrens das digitale Zertifikat schützt, bedeutet dass die mindestens eine kryptographische Zusatzinformation insbesondere als die zweite digitale Signatur ausgebildet ist.

Die zweite digitale Signatur gemäß dem zweiten kryptographischen Signaturverfahren schützt die Integrität und Authentizität des digitalen Zertifikats.

Die mindestens eine kryptographische Zusatzinformation bestätigt somit jeweils insbesondere einen einzigen zweiten öffentlichen Schlüssel eines Nutzers für jeweils insbesondere einen einzigen zweiten kryptographischen Algorithmus. Diese Variante ist von Vorteil, insbesondere wenn das mindestens eine Attributzertifikat in mehrfacher Ausprägung vorliegt, also nicht nur ein Attributzertifikat vorliegt, sondern mehrere Attributzertifikate zu dem Zertifikat vorliegen. Wenn mehrere Attributzertifikate vorliegen, liegen auch mehrere kryptographische Zweitinformationen vor.

Alternativ bestätigt die mindestens eine kryptographische Zusatzinformation jeweils mehrere zweite öffentliche Schlüssel eines Nutzers für mehrere zweite kryptographische Algorithmen.

Die mindestens eine kryptographische Zusatzinformation schützt das digitale Zertifikat somit jeweils mit insbesondere einer einzigen zweiten digitalen Signatur des Herausgebers des digitalen Zertifikats jeweils gemäß insbesondere eines einzigen zweiten kryptographischen Signaturverfahrens. Diese Variante ist von Vorteil, insbesondere wenn das mindestens eine Attributzertifikat in mehrfacher Ausprägung vorliegt, also nicht nur ein Attributzertifikat vorliegt, sondern mehrere Attributzertifikate vorliegen. Wenn mehrere Attributzertifikate vorliegen, liegen auch mehrere kryptographische Zweitinformationen vor.

Alternativ schützt die mindestens eine kryptographische Zusatzinformation das digitale Zertifikat mit mehreren zweiten digitalen Signaturen des Herausgebers des digitalen Zertifikats gemäß mehreren zweiten kryptographischen Signaturverfahren.

Das digitale Zertifikat und auch das mindestens eine Attributzertifikat kann somit mit einer einzelnen zweiten digitalen Signatur geschützt sein, und/oder es kann durch eine Vielzahl von zweiten digitalen Signaturen geschützt sein.

Zusammengefasst liegen somit vorzugsweise mehrere Attributzertifikate vor, sodass eine Mehrzahl (im Sinne von Plural) oder eine Vielzahl von zweiten öffentlichen Schlüsseln des Nutzers bestätigt werden kann, und/oder sodass eine Mehrzahl (im Sinne von Plural) oder eine Vielzahl von zweiten digitalen Signaturen des digitalen Zertifikats vorliegen kann. Dies hat den Vorteil (gegenüber mehreren zweiten öffentlichen Schlüsseln in einem Attributzertifikat und/oder mehreren zweiten digitalen Signaturen in einem Attributzertifikat), dass ein Nutzer je nach Bedarf nur die tatsächlich benötigten Attributzertifikate, d.h. die tatsächlich benötigte Zusatzinformation zu seinem digitalen Zertifikat, an einem Kommunikationspartner übertragen muss. Weiterhin hat dies den Vorteil, dass über ein nachträglich, d.h. zu einem späteren Zeitpunkt als die Ausstellung des digitalen Zertifikats des Nutzers, ausgestelltes Attributzertifikat während der Gültigkeit des digitalen Zertifikats weitere kryptographische Zusatzinformationen, z.B. zu weiteren zweiten öffentlichen Schlüsseln des Nutzers und/oder weitere zweite digitale Signaturen des digitalen Zertifikats durch den Zertifikatsherausgeber, nachträglich gebildet und bereitgestellt werden können. Sie müssen daher nicht bereits dann vorliegen, wenn das digitale Zertifikat selbst ausgestellt wird. Dies hat insbesondere bei langzeitgültigen Zertifikaten, z.B. bei Gerätezertifikaten (IDevID), die bei der Geräteherstellung ausgestellt und auf dem Gerät eingespielt werden, den Vorteil, dass nachträglich weitere zweite Signaturen und/oder weitere zweite öffentliche Schlüssel zu einem bereits ausgestellten digitalen Zertifikat hinzugefügt werden können.

Zusammengefasst wird durch die Erfindung zum einen eine Alternative zu den von ISARA patentierten Zertifikaten (US9660978 und US10425401) geschaffen. Technisch ergibt sich der Vorteil, dass der Ansatz eine erhöhte Flexibilität aufweist, sodass dieser Ansatz auch praktikabel für eine Vielzahl von zweiten öffentlichen Schlüsseln und/oder eine Vielzahl von zweiten digitalen Signaturen anwendbar ist.

Ein weiterer Vorteil der Erfindung ist, dass durch die Trennung der Speicherung der kryptographische Zusatzinformation nicht auf dem digitalen Zertifikat selbst, sondern auf dem zugeordneten Attributzertifikat eine erhöhte Sicherheit gewährleistet wird.

Ein Aspekt der Erfindung besteht zusammengefasst eine kryptographische Zusatzinformation (z.B. Post-Quantum-Krypto-Zusatzinformation) zu einem digitalen Zertifikat in einem dem digitalen Zertifikat zugeordneten Attributzertifikat zu bestätigen. Das digitale Zertifikat umfasst einen ersten öffentlichen Schlüssel eines Nutzers für einen ersten kryptographischen Algorithmus. Das digitale Zertifikat ist mit einer ersten digitalen Signatur des Zertifikatsherausgebers gemäß eines ersten kryptographischen Signaturverfahrens geschützt. Die als Attributzertifikat vorliegende kryptographische Zusatzinformation zu dem digitalen Zertifikat kann (Option 1) einen weiteren öffentlichen Schlüssel des Nutzers für ein weiteres kryptographischen Verfahren bestätigen. Die als Attributzertifikat vorliegende kryptographische Zusatzinformation zu dem digitalen Zertifikat kann (Option 2) eine weitere digitale Signatur des digitalen Zertifikats eines weiteren kryptographischen Signaturverfahrens sein.

In einer Weiterbildung der Erfindung bestätigt die mindestens eine kryptographische Zusatzinformation jeweils den zweiten öffentlichen Schlüssel des Nutzers für den zweiten kryptographischen Algorithmus. Das Verfahren umfasst den weiteren Schritt:
- ein Authentisieren des Nutzers durch einen zweiten privaten Schlüssel, welcher dem zweiten öffentlichen Schlüssel zugeordnet ist.

Dies hat den Vorteil einer verbesserten zertifikatsbasierten Nutzerauthentisierung. Das digitale Zertifikat, z.B. nach X.509, bestätigt, welchem Nutzer der öffentlichen Schlüssel zugeordnet ist. Der Nutzer kann dadurch seine Identität nachweisen, dass er sich mit dem zweiten privaten Schlüssel, welcher dem zweiten öffentlichen Schlüssel zugehörig ist, authentisiert. Genauso kann ein zu dem ersten öffentlichen Schlüssel zugehöriger erster privater Schlüssel für ein weiteres Authentisieren verwendet werden. Ein Nutzer kann dabei beispielsweise eine natürliche Person, eine juristische Person, ein Gerät, eine Gerätekomponente, eine Maschine, ein Fahrzeug oder ein Software-basierter Service, z.B. ein Web-Service oder eine Web-Seite, sein.

In einer weiteren Weiterbildung der Erfindung weist die mindestens eine kryptographische Zusatzinformation eine Richtlinie auf. Die Richtlinie ist auch als eine Policy bezeichenbar.

In einer weiteren Weiterbildung der Erfindung bestätigt die mindestens eine kryptographische Zusatzinformation jeweils den zweiten öffentlichen Schlüssel des Nutzers für den zweiten kryptographischen Algorithmus, wobei die Richtlinie mindestens eine Vorgabe für eine Verwendung eines zweiten kryptographischen Schlüsselpaars angibt, wobei der zweite öffentliche Schlüssel dem zweiten kryptographischen Schlüsselpaar zugehörig ist.

In einer weiteren Weiterbildung der Erfindung gibt die Richtlinie mindestens eine Vorgabe für eine kombinierte Verwendung des zweiten kryptographischen Schlüsselpaars und einem ersten kryptographischen Schlüsselpaar an, wobei der erste öffentliche Schlüssel dem erste kryptographischen Schlüsselpaar zugehörig ist. Die Vorgabe für die kombinieret Verwendung des zweiten kryptographischen Schlüsselpaars und des ersten kryptographischen Schlüsselpaars betrifft insbesondere eine Authentisierung des Nutzers. Dadurch kann beispielsweise vorgegeben werden, dass das zweite kryptographische Schlüsselpaars und das erste kryptographische Schlüsselpaar nur in Kombination verwendet werden dürfen, oder es kann vorgegeben werden, dass sie nicht in Kombination verwendet werden dürfen.

In einer weiteren Weiterbildung der Erfindung schützt die mindestens eine kryptographische Zusatzinformation jeweils mit einer zweiten digitalen Signatur des Herausgebers des digitalen Zertifikats jeweils gemäß eines zweiten kryptographischen Signaturverfahrens das digitale Zertifikat, wobei das mindestens eine Attributzertifikat eine Verknüpfung zu dem digitalen Zertifikat aufweist.

In einer weiteren Weiterbildung der Erfindung ist die Verknüpfung zu dem digitalen Zertifikat als ein kryptographischer Hash-Wert des digitalen Zertifikats ausgebildet.

In einer weiteren Weiterbildung der Erfindung wird die mindestens eine Zusatzinformation jeweils von dem mindestens einen Attributzertifikat aufgewiesen. Die mindestens eine Zusatzinformation ist somit Bestandteil des mindestens einen Attributzertifikats.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele und anhand der schematischen Zeichnung ersichtlich.

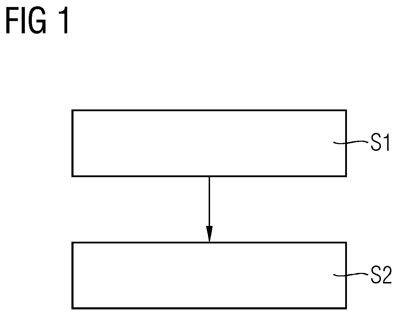

Es zeigen
- Fig. 1: ein Ablaufdiagramm des erfindungsgemäßen Verfahrens.

### DETAILLIERTE BESCHREIBUNG DER ERFINDUNG

Fig. 1 zeigt ein Ablaufdiagramm des erfindungsgemäßen Verfahrens zum Bereitstellen mindestens einer kryptographischen Zusatzinformation zu einem digitalen Zertifikat.

Das digitale Zertifikat weist einen ersten öffentlichen Schlüssel eines Nutzers für einen ersten kryptographischen Algorithmus auf. Das digitale Zertifikat ist mit einer ersten digitalen Signatur eines Herausgebers des digitalen Zertifikats gemäß eines ersten kryptographischen Signaturverfahrens geschützt.

Die mindestens eine kryptographische Zusatzinformation:
∘ bestätigt jeweils einen zweiten öffentlichen Schlüssel eines Nutzers für jeweils einen zweiten kryptographischen Algorithmus, und/oder
∘ schützt jeweils mit einer zweiten digitalen Signatur des Herausgebers des digitalen Zertifikats jeweils gemäß eines zweiten kryptographischen Signaturverfahrens das digitale Zertifikat.

Das Verfahren umfasst die Schritte:
- Schritt S1: Ein Abrufen der mindestens einen kryptographischen Zusatzinformation,
   wobei die mindestens eine Zusatzinformation jeweils von (im Sinne von "aus") mindestens einem Attributzertifikat, welches dem digitalen Zertifikat zugeordneten ist, abgerufen wird,
- Schritt S2: Das Bereitstellen der mindestens einen kryptographischen Zusatzinformation.

Außerdem umfasst das Verfahren die nicht dargestellten Schritte:
- Ein Abrufen mindestens einer weiteren kryptographischen Zusatzinformation,
   wobei die mindestens eine weitere kryptographische Zusatzinformation als mindestens eine weitere Post-Quantum kryptographische Zusatzinformation ausgebildet ist,
   wobei die mindestens eine weitere Zusatzinformation jeweils aus mindestens einem weiteren Attributzertifikat, welches dem digitalen Zertifikat zugeordneten ist, abgerufen wird,
- das Bereitstellen der mindestens einen weiteren kryptographischen Zusatzinformation,
wobei die mindestens eine weitere kryptographische Zusatzinformation:
∘ jeweils einen dritten öffentlichen Schlüssel eines Nutzers für jeweils einen dritten kryptographischen Algorithmus bestätigt, und/oder
∘ jeweils mit einer dritten digitalen Signatur des Herausgebers des digitalen Zertifikats jeweils gemäß eines dritten kryptographischen Signaturverfahrens das digitale Zertifikat schützt.

RFC 5755 definiert für ein Attributzertifikat die folgende ASN.1-Struktur

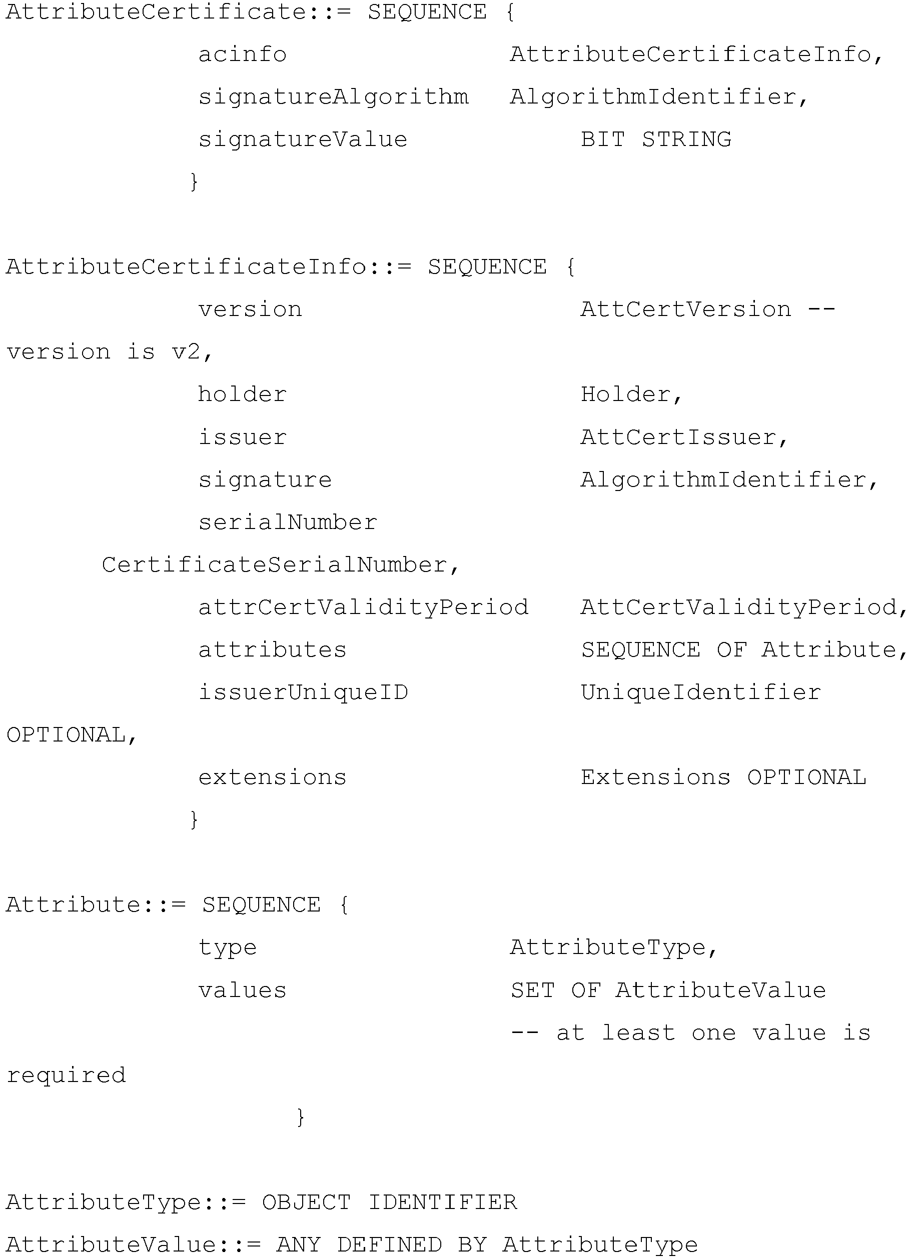

Über "AttributeType" kann ein Identifikationswert (ObjectIdentifier) bereitgestellt werden, der die entsprechenden Attribute kennzeichnet, für die dann im Kontext des "AttributeValues" der jeweilige Wert angegeben ist.

Der "Object"-Identifier für den "AttributeType" kann nach ITU-T X.509 wie folgt definiert sein:
id-SubjectAltCrypto OBJECT_IDENTIFIER::= { id-ce-SubjectAltCrpto }

Der Wert des "AttributeValue" ist zum Beispiel wie folgt definiert:

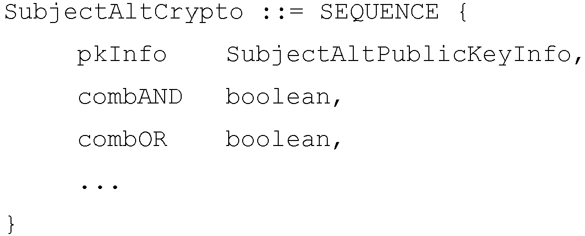

Über "combAND" und "combOR" kann festgelegt werden, ob beide Schlüssel nur gemeinsam genutzt werden dürfen oder alternativ einer von beiden. Dies ermöglicht auch eine flexible Migration zu einem stärken kryptographischen Verfahren, die über den entsprechenden "AlgorithmIdentifier" der "subjectAltPublicKeyInfo" festgelegt sind. Ist "combAND" gesetzt, werden immer beide Verfahren angewendet. Ist "combOR" gesetzt, kann nur der im Attributzertifikat enthaltene Schlüssel auch allein genutzt werden. Werden mehrere Attribute zu einem Nutzerzertifikat verwendet, können somit auch mehrere Verfahren (mehr als 2) über "combAND" genutzt werden. Weiterhin ist es denkbar ein K aus N Verfahren zu realisieren, also bei 3 Attributzertifikaten müssen 2 von 3 erfolgreich genutzt werden. Dazu kann dann im

Attributzertifikat der Wert K als Zahlenwert enthalten sein (alternativ oder zusätzlich zu den Attributen "combAND" und "combOR").

Die folgenden Elemente sind bereits in ITU-T X.509 für reguläre Zertifikate definiert und können für die Beschreibung der Attribute erfindungsgemäß in einem Attributzertifikat genutzt werden:

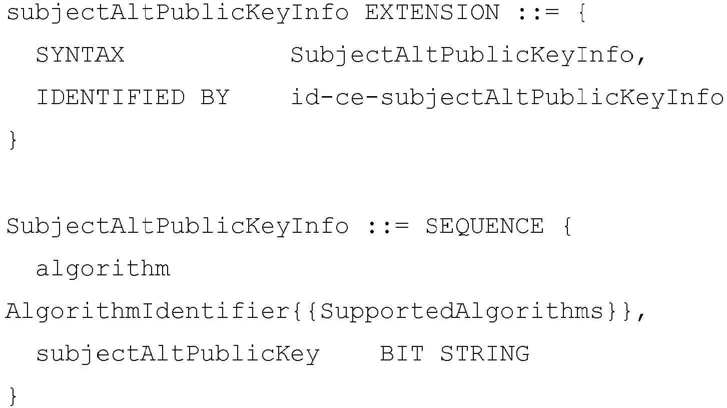

In einer alternativen Variante werden die definierten Attributwerte nicht direkt als Attribut genutzt, sondern als Erweiterung des Attributzertifikates unter "Extensions". "Extensions" sind wie folgt in ITU-T X.509 definiert:

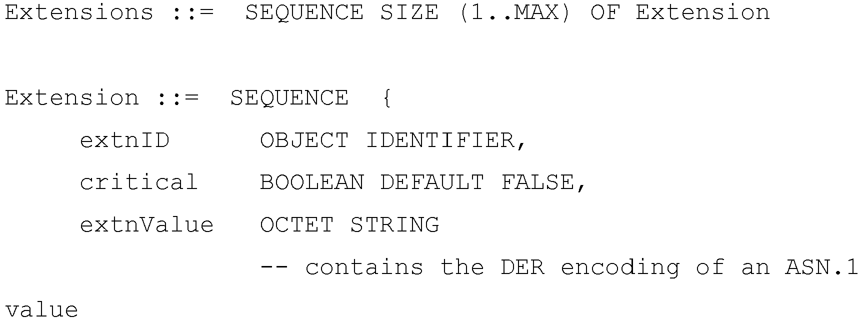

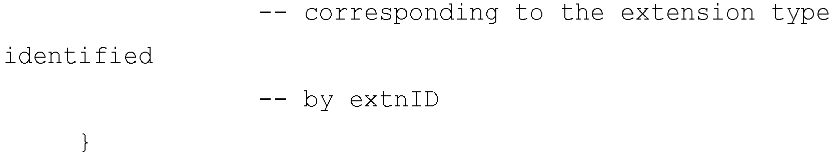

Die Extension zur Angabe alternativer kryptographischer Algorithmen anderer im gleichen Attributzertifikat angegebenen Verfahren kann als "critical" oder als "non critical" gekennzeichnet sein. Dies kann bei einer Extension vorteilhafterweise verwendet werden. "extnID" enthält dann den definierten Identifier "id-ce-SubjectAltCrpto" und "extnValue" die entsprechende codierte Struktur "subjectAltCrypto".

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Bereitstellen mindestens einer kryptographischen Zusatzinformation zu einem digitalen Zertifikat,
wobei die mindestens eine kryptographische Zusatzinformation als mindestens eine Post-Quantum kryptographische Zusatzinformation ausgebildet ist,
wobei das digitale Zertifikat:
∘ einen ersten öffentlichen Schlüssel eines Nutzers für einen ersten kryptographischen Algorithmus aufweist, und/oder
∘ mit einer ersten digitalen Signatur eines Herausgebers des digitalen Zertifikats gemäß eines ersten kryptographischen Signaturverfahrens geschützt ist,
wobei die mindestens eine kryptographische Zusatzinformation:
∘ jeweils einen zweiten öffentlichen Schlüssel eines Nutzers für jeweils einen zweiten kryptographischen Algorithmus bestätigt, und/oder
∘ jeweils mit einer zweiten digitalen Signatur des Herausgebers des digitalen Zertifikats jeweils gemäß eines zweiten kryptographischen Signaturverfahrens das digitale Zertifikat schützt,
das Verfahren, aufweisend die Schritte:
- ein Abrufen (S1) der mindestens einen kryptographischen Zusatzinformation,
wobei die mindestens eine Zusatzinformation jeweils aus mindestens einem Attributzertifikat, welches dem digitalen Zertifikat zugeordneten ist, abgerufen wird,
- das Bereitstellen (S2) der mindestens einen kryptographischen Zusatzinformation.
- ein Abrufen mindestens einer weiteren kryptographischen Zusatzinformation,
wobei die mindestens eine weitere kryptographische Zusatzinformation als mindestens eine weitere Post-Quantum kryptographische Zusatzinformation ausgebildet ist,
wobei die mindestens eine weitere Zusatzinformation jeweils aus mindestens einem weiteren Attributzertifikat, welches dem digitalen Zertifikat zugeordneten ist, abgerufen wird,
- das Bereitstellen der mindestens einen weiteren kryptographischen Zusatzinformation,
wobei die mindestens eine weitere kryptographische Zusatzinformation:
∘ jeweils einen dritten öffentlichen Schlüssel eines Nutzers für jeweils einen dritten kryptographischen Algorithmus bestätigt, und/oder
∘ jeweils mit einer dritten digitalen Signatur des Herausgebers des digitalen Zertifikats jeweils gemäß eines dritten kryptographischen Signaturverfahrens das digitale Zertifikat schützt.

2. Verfahren nach Anspruch 1,
wobei die mindestens eine kryptographische Zusatzinformation jeweils den zweiten öffentlichen Schlüssel des Nutzers für den zweiten kryptographischen Algorithmus bestätigt,
mit dem weiteren Schritt:
- ein Authentisieren des Nutzers durch einen zweiten privaten Schlüssel, welcher dem zweiten öffentlichen Schlüssel zugeordnet ist.

3. Verfahren nach einem der vorhergehenden Ansprüche,
wobei die mindestens eine kryptographische Zusatzinformation eine Richtlinie aufweist.

4. Verfahren nach Anspruch 3,
wobei die mindestens eine kryptographische Zusatzinformation jeweils den zweiten öffentlichen Schlüssel des Nutzers für den zweiten kryptographischen Algorithmus bestätigt,
wobei die Richtlinie mindestens eine Vorgabe für eine Verwendung eines zweiten kryptographischen Schlüsselpaars angibt,
wobei der zweite öffentliche Schlüssel dem zweiten kryptographischen Schlüsselpaar zugehörig ist.

5. Verfahren nach Anspruch 4,
wobei die Richtlinie mindestens eine Vorgabe für eine kombinierte Verwendung des zweiten kryptographischen Schlüsselpaars und einem ersten kryptographischen Schlüsselpaar angibt,
wobei der erste öffentliche Schlüssel dem erste kryptographischen Schlüsselpaar zugehörig ist.

6. Verfahren nach einem der vorhergehenden Ansprüche,
wobei die mindestens eine kryptographische Zusatzinformation jeweils mit einer zweiten digitalen Signatur des Herausgebers des digitalen Zertifikats jeweils gemäß eines zweiten kryptographischen Signaturverfahrens das digitale Zertifikat schützt,
wobei das mindestens eine Attributzertifikat eine Verknüpfung zu dem digitalen Zertifikat aufweist.

7. Verfahren nach Anspruch 6,
wobei die Verknüpfung zu dem digitalen Zertifikat als ein kryptographischer Hash-Wert des digitalen Zertifikats ausgebildet ist.

8. Verfahren nach einem der vorhergehenden Ansprüche,
wobei die mindestens eine Zusatzinformation jeweils von dem mindestens einen Attributzertifikat aufgewiesen wird.

9. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 8 ausgeführt werden, wenn das Computerprogramm auf der Recheneinheit ausgeführt wird.

10. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 8 ausgeführt werden, wenn das Computerprogramm auf der Recheneinheit ausgeführt wird.

## Claims

1. Method for providing at least one item of additional cryptographic information relating to a digital certificate, wherein the at least one item of additional cryptographic information is in the form of at least one item of additional post-quantum cryptographic information,
wherein the digital certificate:
∘ has a first public key belonging to a user for a first cryptographic algorithm, and/or
∘ is protected with a first digital signature of an issuer of the digital certificate according to a first cryptographic signature method,
wherein the at least one item of additional cryptographic information:
∘ in each case confirms a second public key belonging to a user for a second cryptographic algorithm in each case, and/or
∘ in each case protects the digital certificate with a second digital signature of the issuer of the digital certificate in each case according to a second cryptographic signature method, the method comprising the steps of:
- retrieving (S1) the at least one item of additional cryptographic information,
wherein the at least one item of additional information is respectively retrieved from at least one attribute certificate assigned to the digital certificate,
- providing (S2) the at least one item of additional cryptographic information,
- retrieving at least one further item of additional cryptographic information,
wherein the at least one further item of additional cryptographic information is in the form of at least one further item of additional post-quantum cryptographic information,
wherein the at least one further item of additional information is respectively retrieved from at least one further attribute certificate assigned to the digital certificate,
- providing the at least one further item of additional cryptographic information,
wherein the at least one further item of additional cryptographic information:
∘ in each case confirms a third public key belonging to a user for a third cryptographic algorithm in each case, and/or
∘ in each case protects the digital certificate with a third digital signature of the issuer of the digital certificate in each case according to a third cryptographic signature method.

2. Method according to Claim 1,
wherein the at least one item of additional cryptographic information in each case confirms the second public key belonging to the user for the second cryptographic algorithm, having the further step of:
- authenticating the user by means of a second private key assigned to the second public key.

3. Method according to one of the preceding claims,
wherein the at least one item of additional cryptographic information comprises a guideline.

4. Method according to Claim 3,
wherein the at least one item of additional cryptographic information in each case confirms the second public key belonging to the user for the second cryptographic algorithm,
wherein the guideline indicates at least one specification for using a second cryptographic key pair,
wherein the second public key is associated with the second cryptographic key pair.

5. Method according to Claim 4,
wherein the guideline indicates at least one specification for combined use of the second cryptographic key pair and a first cryptographic key pair,
wherein the first public key is associated with the first cryptographic key pair.

6. Method according to one of the preceding claims,
wherein the at least one item of additional cryptographic information in each case protects the digital certificate with a second digital signature of the issuer of the digital certificate in each case according to a second cryptographic signature method,
wherein the at least one attribute certificate has a link to the digital certificate.

7. Method according to Claim 6,
wherein the link to the digital certificate is in the form of a cryptographic hash value of the digital certificate.

8. Method according to one of the preceding claims,
wherein the at least one item of additional information is respectively shown by the at least one attribute certificate.

9. Computer program product comprising a computer program, wherein the computer program can be loaded into a memory device of a computing unit, wherein the steps of a method according to one of Claims 1 to 8 are carried out with the computer program when the computer program is executed on the computing unit.

10. Computer-readable medium on which a computer program is stored, wherein the computer program can be loaded into a memory device of a computing unit, wherein the steps of a method according to one of Claims 1 to 8 are carried out with the computer program when the computer program is executed on the computing unit.

## Revendications

1. Procédé pour la fourniture d'au moins une information supplémentaire cryptographique à un certificat numérique,
dans lequel l'au moins une information supplémentaire cryptographique est conçue sous la forme d'au moins une information supplémentaire cryptographique post-quantique, dans lequel le certificat numérique :
∘ comprend une première clé publique d'un utilisateur pour un premier algorithme cryptographique, et/ou
∘ est protégé avec une première signature numérique d'un éditeur du certificat numérique selon un premier procédé de signature cryptographique,
dans lequel l'au moins une information supplémentaire cryptographique :
∘ confirme à chaque fois une deuxième clé publique d'un utilisateur pour à chaque fois un deuxième algorithme cryptographique, et/ou
∘ protège le certificat numérique à chaque fois avec une deuxième signature numérique de l'éditeur du certificat numérique à chaque fois selon un deuxième procédé de signature cryptographique,
le procédé comprenant les étapes suivantes :
- une récupération (S1) de l'au moins une information supplémentaire cryptographique,
dans lequel l'au moins une information supplémentaire est récupérée à chaque fois à partir d'au moins un certificat d'attribut, lequel est associé au certificat numérique,
- la fourniture (S2) de l'au moins une information supplémentaire cryptographique,
- une récupération d'au moins une autre information supplémentaire cryptographique,
dans lequel l'au moins une autre information supplémentaire cryptographique est conçue sous la forme d'au moins une autre information supplémentaire cryptographique post-quantique,
dans lequel l'au moins une autre information supplémentaire est récupérée à chaque fois à partir d'au moins un autre certificat d'attribut, lequel est associé au certificat numérique,
- la fourniture de l'au moins une autre information supplémentaire cryptographique,
dans lequel l'au moins une autre information supplémentaire cryptographique :
∘ confirme à chaque fois une troisième clé publique d'un utilisateur pour à chaque fois un troisième algorithme cryptographique, et/ou
∘ protège le certificat numérique à chaque fois avec une troisième signature numérique de l'éditeur du certificat numérique à chaque fois selon un troisième procédé de signature cryptographique.

2. Procédé selon la revendication 1,
dans lequel l'au moins une information supplémentaire cryptographique confirme à chaque fois la deuxième clé publique de l'utilisateur pour le deuxième algorithme cryptographique, avec l'étape complémentaire suivante :
- une authentification de l'utilisateur par le biais d'une deuxième clé privée, laquelle est associée à la deuxième clé publique.

3. Procédé selon l'une des revendications précédentes,
dans lequel l'au moins une information supplémentaire cryptographique comprend une directive.

4. Procédé selon la revendication 3,
dans lequel l'au moins une information supplémentaire cryptographique confirme à chaque fois la deuxième clé publique de l'utilisateur pour le deuxième algorithme cryptographique, dans lequel la directive indique au moins une spécification pour une utilisation d'un deuxième couple de clés cryptographiques, dans lequel la deuxième clé publique appartient au deuxième couple de clés cryptographiques.

5. Procédé selon la revendication 4,
dans lequel la directive indique au moins une spécification pour une utilisation combinée du deuxième couple de clés cryptographiques et d'un premier couple de clés cryptographiques,
dans lequel la première clé publique appartient au premier couple de clés cryptographiques.

6. Procédé selon l'une des revendications précédentes,
dans lequel l'au moins une information supplémentaire cryptographique protège le certificat numérique à chaque fois avec une deuxième signature numérique de l'éditeur du certificat numérique à chaque fois selon un deuxième procédé de signature cryptographique,
dans lequel l'au moins un certificat d'attribut comprend un lien vers le certificat numérique.

7. Procédé selon la revendication 6,
dans lequel le lien vers le certificat numérique est conçu sous la forme d'une valeur de hachage cryptographique du certificat numérique.

8. Procédé selon l'une des revendications précédentes,
dans lequel l'au moins une information supplémentaire est présentée à chaque fois par l'au moins un certificat d'attribut.

9. Produit de programme informatique, comportant un programme informatique, dans lequel le programme informatique est chargeable dans un dispositif de mémoire d'une unité de calcul, dans lequel les étapes d'un procédé selon l'une des revendications 1 à 8 sont exécutées avec le programme informatique lorsque le programme informatique est exécuté sur l'unité de calcul.

10. Support lisible par ordinateur, sur lequel un programme informatique est mémorisé, dans lequel le programme informatique est chargeable dans un dispositif de mémoire d'une unité de calcul, dans lequel les étapes d'un procédé selon l'une des revendications 1 à 8 sont exécutées avec le programme informatique lorsque le programme informatique est exécuté sur l'unité de calcul.
